# EUROPÄISCHE PATENTSCHRIFT

(11) **EP 2 470 375 B1**
(45) Veröffentlichungstag und Bekanntmachung des Hinweises auf die Patenterteilung: **13.07.2016**
(21) Anmeldenummer: 10750043.1
(22) Anmeldetag: 23.08.2010
(51) Int. Cl.: B44C 1/17, B32B 38/00, B32B 38/04, B42D 25/328, B42D 25/346, B42D 25/455, B42D 25/46, B42D 25/47, B42D 25/475

(54) **FOLIENVERBUND UND VERFAHREN ZUR HERSTELLUNG DES FOLIENVERBUNDES SOWIE VERFAHREN ZUR HERSTELLUNG EINES SICHERHEITSDOKUMENTES MIT EINEM SOLCHEN FOLIENVERBUND**
COMPOSITE FILM AND METHOD FOR PRODUCING THE COMPOSITE FILM AND METHOD FOR PRODUCING A SECURITY DOCUMENT HAVING SUCH A COMPOSITE FILM
COMPOSITE EN FEUILLES, PROCÉDÉ DE FABRICATION D'UN COMPOSITE EN FEUILLES, ET PROCÉDÉ DE FABRICATION D'UN DOCUMENT DE SÉCURITÉ CONTENANT UN TEL COMPOSITE EN FEUILLES

(30) Priorität: 24.08.2009 DE 102009038401
(43) Veröffentlichungstag der Anmeldung: 04.07.2012
(73) Patentinhaber: Bundesdruckerei GmbH, 10958 Berlin (DE)
(72) Erfinder: LEOPOLD, André, 10119 Berlin (DE); GAHLBECK, Jeffry, 15517 Fürstenwaide (DE); MÄRTENS, Detlef, 13599 Berlin (DE); SEIJO-BOLLIN, Hans-Peter, 10245 Berlin (DE)
(74) Vertreter: Maser, Jochen
(86) Internationale Anmeldenummer: PCT/EP2010/005147
(87) Internationale Veröffentlichungsnummer: WO 2011/023346

(56) Entgegenhaltungen:
- EP-A2- 0 466 118
- WO-A1-95/20493

## Beschreibung

Der Gegenstand der Erfindung betrifft einen Folienverbund und ein Verfahren zu dessen Herstellung sowie ein Verfahren zur Herstellung eines Sicherheitsdokumentes mit einem solchem Folienverbund.

Aus der EP 0 466 118 A2, die der Oberbegriff des Anspruchs 1 offenbart, geht ein mehrschichtiges optisch variables Element zum Aufbringen auf einem Sicherheitsdokument hervor. Dabei weist das optisch variable Element, insbesondere ein Hologramm, eine mechanisch stabile Schutzfolie auf, welche das aus Sicherheitsgründen mechanisch instabil ausgebildete Hologramm nach der Applikation auf dem Sicherheitsdokument vor äußeren Einflüssen schützt, wobei durch ein Vorstanzen der Schutzfolie ein Aufbringen des optisch variablen Elements auf dem Sicherheitsdokument ermöglicht ist.

Desweitere ist zur Herstellung eines mehrlagigen Sicherheitsdokumentes, welches aus zumindest einer Karte und zumindest einer auf einer Seite der Karte aufgebrachten Polymerfolie besteht, bereits ein Verfahren bekannt, bei dem einzelne aus Polymerfolie bestehende Nutzen beispielsweise als Streifen bereitgestellt werden. Diese umfassen mehrere Nutzen. Solche Streifen können beispielsweise aus einem Bogenlaminat hergestellt und anschließend in einer vorbestimmten Reihenfolge hintereinander angeordnet werden, wodurch gleichzeitig eine gegebenenfalls vorliegende Vorpersonalisierung oder Personalisierung der Streifen mit ihren Nutzen berücksichtigt wird. Bei diesem Herstellungsverfahren wird dann die Polymerfolie personalisiert. Anschließend wird in einer Kaschierstation die Polymerfolie den personalisierten Streifen zugeführt und jeder Nutzen passend zum entsprechenden Nutzen auf den entsprechende Streifen auflaminiert. Anschließend erfolgt eine Stanzung des fertigen Kartenverbundes, wobei vorgesehen ist, dass die Folie auf Übermaß auf die Karte aufgeklebt wird, so dass durch die Stanzung ein exakter Randabschluss geschaffen wird. Vor oder nach dem Stanzen kann auf die Polymerfolie eine Kratzschutzbeschichtung, beispielsweise in Form eines Lackes oder einer Deckfolie, aufgebracht werden. Anschließend erfolgt eine Trocknung, bevor das Sicherheitsdokument in einem Speicher gestapelt wird.

Eine solche Herstellung von Sicherheitsprodukten ermöglicht eine rationelle Herstellung von Sicherheitsdokumenten, wobei die einzelnen Arbeitsschritte zur Herstellung solcher Sicherheitsdokumente an einem gemeinsamen Ort erfolgen.

Zunehmend wird jedoch gefordert, dass eine dezentrale Personalisierung von Sicherheitsdokumenten ermöglicht sein soll, wobei diese dezentrale Personalisierung der Sicherheitsdokumente nur dann wirtschaftlich sinnvoll durchzuführen ist, wenn die Personalisierung und der Schutz dieser Personalisierung ohne wartungsintensive Verfahren und in einfacher Weise ermöglicht ist. "Dezentral" bedeutet hierbei insbesondere, dass Personalisierung der Karte an einem anderen Ort erfolgen kann als die Herstellung der Rohkarte sowie der Folie. Das vorstehend beschriebene Herstellungsverfahren ist für eine dezentrale Personalisierung aufwändig, und die dazu erforderlichen Bearbeitungsstationen sind nicht leicht von einem ungeschulten Personal bedienbar.

Der Erfindung liegt deshalb die Aufgabe zugrunde, einen Folienverbund sowie ein Verfahren zu dessen Herstellung als auch ein Verfahren zur Herstellung eines Sicherheitsdokumentes mit einem solchen Folienverbund vorzuschlagen, bei welchem ohne wartungsintensive Verfahrensschritte und in einfacher Weise eine dezentrale Personalisierung zur Herstellung von mehrlagigen Sicherheitsdokumenten ermöglicht wird, bei denen die Personalisierung durch ein hochwertiges Sicherheitsmerkmal geschützt ist.

Diese Aufgabe wird durch einen Folienverbund gelöst, der zum Kaschieren, insbesondere dezentral, auf einer Karte zur Herstellung eines mehrlagigen Sicherheitsdokumentes vorgesehen ist, welcher eine Polymerfolie umfasst, die auf einer Seite eine Kratzschutzbeschichtung und eine darauf abziehbare Releasefolie aufweist, sowie auf der anderen Seite der Kratzschutzbeschichtung auf der Polymerfolie eine Klebemittelschicht umfasst und die Polymerfolie mehrere durch Stanzung hergestellte Nutzen umfasst und die Stanzung die Klebemittelschicht, die Polymerfolie und die Kratzschutzschicht durchdringt, wobei die Stanzung teilweise in die Releasefolie eindringt und die Polymerfolie innerhalb des Nutzens Sollbruchstellen aufweist. Dadurch wird ein Folienverbund zum Kaschieren einer Rohkarte oder einer personalisierten Rohkarte bereitgestellt ohne weitere Verfahrensschritte zu erfordern. Durch die Stanzung zur Bildung eines Nutzens in dem Folienverbund kann die Releasefolie zum Hindurchführen durch die Kaschierstation vorgesehen sein, wobei während dem Kaschieren des Nutzens auf die Karte ein einfaches Ablösen von der Releasefolie ermöglicht ist. Der Stanzprozess und das Aufbringen der Klebemittelschicht werden in den Herstellungsprozess für den Folienverbund verlagert, so dass das Aufbringen des Nutzens auf die insbesondere personalisierte Karte vereinfacht ist. Somit können beispielsweise einzelne Behörden, Ämter oder sonstige Einrichtungen mit einer Personalisierstation und einer Kaschierstation ausgestattet sein, um personalisierte Sicherheitsdokumente herzustellen. Dabei können durch den Einsatz des erfindungsgemäßen Folienverbundes aufwändige Bearbeitungsschritte am Ausstellungsort, wie beispielsweise das Beschichten von überformatigen Passkarten mit einem reaktiven Kleber, das Aufkaschieren und anschließende Verkleben, Trocknen und Ausstanzen sowie das weitere Aufbringen von Schutzlacken oder dergleichen, entfallen. Vielmehr ist eine einfache Herstellung dezentral ermöglicht. Durch die bereits aufgebrachte Klebeschicht und eingebrachte Stanzung kann vor Ort durch den Arbeitsschritt "Kaschieren der Polymerfolie auf eine Karte" in einfacher Weise die Fertigstellung des mehrlagigen Sicherheitsproduktes erfolgen.

Nach einer bevorzugten Ausgestaltung des Folienverbundes ist vorgesehen, dass jeder Nutzen zumindest ein Merkmal, ein Sicherheitsmerkmal und/oder ein Identitätsmerkmal aufweist. Dadurch kann eine Erhöhung der Fälschungssicherheit des Folienverbundes als auch der hergestellten Sicherheitsdokumente erzielt werden. Zum einen können diese Merkmale dazu dienen, um zu überprüfen, dass die Echtheit des bereitgestellten Folienverbundes gegeben ist und einzelne Nutzen nicht ausgetauscht sind. Zum anderen kann die Produktion der fertiggestellten Sicherheitsdokumente mit den dafür vorgesehenen Nutzen geprüft werden. Bevorzugt ist als Merkmal, Sicherheitsmerkmal und/oder Identitätsmerkmal eine holographische Kennzeichnung wie beispielsweise das Einbringen einer holographischen Belichtung vorgesehen. Dabei können verschiedene kinematische Strukturen, 2D- oder 3D-Objekte oder beliebige Muster eingebracht werden. Beispielsweise können sogenannte Prägehologramme vorgesehen sein. Insbesondere sind jedoch Volumenhologramme in die Polymerfolie eingebracht, welche gegenüber Prägehologrammen eine höhere Beugungseffizienz und damit Helligkeit sowie eine höhere Winkel- und Wellenlängenselektivität umfassen. Des Weiteren können fortlaufende Merkmale oder Kennzeichen, wie beispielsweise eine Nummerierung oder dergleichen, vorgesehen sein.

Nach einer weiteren bevorzugten Ausgestaltung des Folienverbundes ist vorgesehen, dass die Polymerfolie innerhalb des Nutzens einzelne Schnitte als Sollbruchstellen aufweist. Diese Schnitte als Sollbruchstelle sind insbesondere im Bereich des Merkmals, Sicherheitsmerkmals und/oder Identitätsmerkmals vorgesehen. Dadurch wird sichergestellt, dass nach der Herstellung des Sicherheitsdokumentes die Polymerfolie nicht zerstörungsfrei von der Karte abgelöst werden kann.

Nach einer weiteren bevorzugten Ausgestaltung des Folienverbundes ist vorgesehen, dass der jeweilige Nutzen ein Format aufweist, welches dem Format der Rohkarte entspricht oder geringfügig kleiner ist. Dies weist den Vorteil auf, dass nach dem Aufkaschieren des Nutzens auf die Rohkarte oder personalisierte Karte ein weiterer Stanzvorgang nicht erforderlich ist. Insbesondere bei einem geringfügig kleineren Format wird ermöglicht, dass nach dem Aufkaschieren gegebenenfalls unter Druck kein Überstand des Nutzens gegenüber der Karte gegeben ist.

Nach einer weiteren bevorzugten Ausgestaltung der Erfindung ist vorgesehen, dass in den Folienverbund, benachbart und außerhalb zum Nutzen, eine Transportlochung oder eine durchdringende Stanzung in die bahnförmigen Materialien des Folienverbundes eingebracht ist. Dadurch wird bei der späteren Bearbeitung des Folienverbundes ein vereinfachter Transport der einzelnen Nutzen in eine Kaschierstation ermöglicht. Des Weiteren kann ein exakter Vorschub und eine exakte Positionierung zur zu kaschierenden Karte gegeben sein. Durch das bevorzugte gleichzeitige Einbringen der Transportlochung und der Stanzung kann eine exakte Zuordnung der Transportlochung zum jeweiligen Nutzen ermöglicht werden. Alternativ oder zusätzlich zur Transportlochung kann eine Steuerlinie und/oder eine Steuermarke aufgebracht sein, wobei die Steuerlinie und/oder Steuermarke holographisch ausgebildet sein kann.

Eine weitere bevorzugte Ausgestaltung der Erfindung sieht vor, dass die Polymerfolie des Folienverbundes ein- oder mehrschichtig ausgebildet ist und vorzugsweise ein Photopolymer, eine Silberhalogenid-Beschichtung, Dichromatgelatine oder aus anderen für die Volumenholographie geeigneten Materialien besteht. Dadurch wird in einfacher Weise eine volumenholographische Overlayfolie zum Aufkaschieren auf eine Karte zur Herstellung eines mehrlagigen Sicherheitsdokumentes ermöglicht.

Zur Herstellung des vorstehend beschriebenen Folienverbundes ist insbesondere zur dezentralen Herstellung eines Sicherheitsdokumentes gemäß einem ersten erfindungsgemäßen Verfahren vorgesehen, dass eine beidseitig mit einem Schutzfilm versehene Polymerfolie bereitgestellt wird, dass eine Schutzfolie abgezogen und eine Klebemittelschicht aufgebracht wird, dass die gegenüberliegende Schutzfolie von der Polymerfolie abgezogen und anschließend eine Kratzschutzschicht aufgebracht wird, dass auf die Kratzschutzschicht eine Releasefolie zu dessen Schutz aufgebracht wird und dass eine Stanzung des bahnförmigen Folienverbundes zur Herstellung mehrerer Nutzen eingebracht wird, welche die Klebemittelschicht, den Polymerfilm und die Kratzschutzschicht durchtrennt und in die Releasefolie nur teilweise eindringt und dass in die Klebemittelschicht und die Polymerschicht innerhalb des Nutzens Sollbruchstellen eingestanzt werden. Durch diese Verfahrensschritte kann ein für ein Sicherheitsdokument vorgesehener Polymerfilm bereitgestellt werden, der zum Transport an eine dezentrale Stelle robust ausgebildet ist und dezentral in einfacher Weise zur Herstellung eines Sicherheitsdokumentes verarbeitet werden kann.

Eine alternative Ausgestaltung des Verfahrens zur Herstellung eines Folienverbundes, insbesondere zur dezentralen Herstellung eines Sicherheitsdokumentes, sieht vor, dass eine Polymerfolie mit einer auf einer Seite der Polymerfolie aufgebrachten Schutzfolie und auf einer gegenüberliegenden Seite der Polymerfolie mit einer bereits aufgebrachten Kratzschutzschicht und einer darauf vorgesehenen Releasefolie bereitgestellt wird, bei dem die Schutzfolie abgezogen und eine Klebemittelschicht aufgebracht wird und bei dem eine Stanzung des bahnförmigen Folienverbundes zur Herstellung mehrerer Nutzen eingebracht wird, welche die Klebeschicht, den Polymerfilm, die Kratzschutzschicht durchtrennt und in die Releasefolie nur teilweise eindringt und bei dem in die Klebemittelschicht (21) und Polymerfolie (14) innerhalb des Nutzens (24) Sollbruchstellen (28) eingestanzt werden. Beim Bereitstellen einer solchen Folie können die gemäß dem vorstehenden Verfahren beschriebenen Schritte, und zwar das Abziehen der zweiten Schutzfolie, das Aufbringen einer Klebemittelschicht und einem anschließenden Aufbringen der Releasefolie, entfallen.

Nach einer weiteren vorteilhaften Ausgestaltung des Verfahrens ist vorgesehen, dass vor dem Ablösen der ersten Schutzfolie zumindest ein Merkmal, ein Sicherheitsmerkmal und/oder Identitätsmerkmal eingebracht wird. Das Merkmal, Sicherheitsmerkmal und/oder Identitätsmerkmal wird als holographische Kennzeichnung, insbesondere Präge-oder Volumenhologramm oder als vorbestimmte Kennzeichnung, in die Polymerfolie eingebracht. Bei der vorbestimmten Kennzeichnung kann es sich insbesondere um eine fortlaufende Kennzeichnung, wie beispielsweise eine Nummerierung, handeln. Bei dem Einbringen des Merkmals, Sicherheitsmerkmals und/oder Identitätsmerkmals in die Polymerfolie ist bevorzugt eine holographische Belichtung sowie eine gegebenenfalls erforderliche Fixierung des Materials, beispielsweise durch nasschemische Prozesse, durch Einbringung von Licht und/oder Temperatur oder dergleichen vorgesehen. Die holographische Belichtung kann kinematische Strukturen, 2D- oder 3D-Objekte, beliebige Muster als auch individuelle Daten enthalten. Ebenso können fortlaufende Kennzeichen, wie eine Nummerierung oder dergleichen, vorgesehen sein. Alternativ können auch Prägehologrammen eingebracht sein.

Eine weitere bevorzugte Ausgestaltung des Verfahrens sieht vor, dass die Klebemittelschicht aufgeprägt, aufgedruckt oder aufgerakelt und vorzugsweise anschließend getrocknet wird. Bevorzugt werden temperaturaktivierbare und/oder druckaktivierbare Klebstoffe eingesetzt. Beispielsweise können auch UV-reaktive Klebemittel, PET-Klebemittel oder PC-Klebemittel oder dergleichen eingesetzt werden. Ein Beispiel für einen Klebstoff kann z.B. ein zweikomponentiges System sein, bei dem in zwei Schritten zuerst eine feste Schicht durch UV-Strahlung bei der Herstellung des Verbunds, und beim Aufbringen auf die Karte durch die Applikation von Druck und Wärme das Verkleben erreicht wird, wie es z.B. in der deutschen Patentanmeldung DE 102006048464 dargestellt ist. Alternativ und besonders bevorzugt wird ein Haftklebstoff, z.B. UV-HK-926, verwendet, bei dem der zweite Schritt lediglich über die Zuführung von Druck, nicht jedoch Wärme, erfolgt. Der erste Schritt bleibt eine UV-Fixierung, der Kleber kann z.B. im flüssigen Zustand aufgerakelt, gedruckt u.dgl. werden, bevor er mittels der UV-Strahlung fest, aber haftend wird. Die Variante des Haftklebstoffs ist besonders deshalb vorteilhaft, weil sich durch das temperaturlose Verkleben das Material nur gering verformt oder verzieht, was insbesondere bei Volumenhologrammen negative Auswirkungen auf die Hologrammqualität (z.B. Beugungseffizienz) hat. Ein anderes Beispiel wäre ein thermischer Reaktivklebstoff wie er beispielsweise in der deutschen Patentanmeldung DE 102008052572 beschrieben ist.

Die Auswahl des Klebemittels erfolgt in Abhängigkeit des verwendeten Materials der Karte bzw. des Kartensubstrats der Karte und der Polymerfolie. "PC" steht dabei für Polycarbonat als Kartensubstrat, beispielsweise Bisphenol-A-Polycarbonat. Selbstverständlich sind auch andere Kartensubstrate alternativ verwendbar, insbesondere Polyvinylchlorid (PVC), Polyethylenterephthalat (PET), deren Derivaten wie Glykolmodifiziertem PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplatischen Elastomeren (TPE), insbesondere thermoplastischem Polyurethan (TPU), AcrylnitrilButadien-Styrol (ABS), Papier, Teslin^{®} sowie deren Derivaten, PET-G, PET-F, koextrudierten Folien, welche unter anderen diese Materialien enthalten, sowie Hybridmaterialien, welche unter anderen die oben genannten Materialien enthalten.

Eine weitere bevorzugte Ausgestaltung des Verfahrens sieht vor, dass die Klebemittelschicht innerhalb der Stanzung des Nutzens aufgebracht wird. Dadurch kann eine Einsparung des Klebemittels erzielt werden. Zudem ist es insbesondere dann von Vorteil, wenn man das Format der Stanzung kleiner als das Format der Rohkarte ist. Dadurch kann des Weiteren eine Vereinfachung der Verarbeitung beim dezentralen Kaschieren des Folienverbundes auf die jeweilige Karte ermöglicht werden. Durch diese Ausgestaltung kann das Ablösen der Releaseschicht von dem Nutzen quasi zeitunabhängig erfolgen. Sofern über den Bereich des Nutzens hinaus Klebemittel aufgebracht wird, ist erforderlich, dass die Releasefolie bei noch nicht ausgehärtetem Klebemittel von der Karte abgezogen wird.

Eine vorteilhafte Ausgestaltung des Verfahrens zur Herstellung des Folienverbundes sieht vor, dass die der Kratzschutzschicht gegenüberliegende und auf die Polymerschicht aufgebrachte Klebemittelschicht blockfrei ausgebildet wird. Dies ermöglicht, ohne dem zusätzlichen Aufbringen einer Releasefolie ein Aufrollen des bahnförmigen Folienverbundes und einen anschließenden Transport. Die Klebemittelschicht kann dabei bevorzugt mit einer Dicke von 0,5 bis 50 µm, bevorzugt 1 bis 20 µm, besonders bevorzugt 3 bis 10 µm, aufgetragen werden.

Alternativ kann vorgesehen sein, dass eine Klebemittelschicht aufgebracht wird, welche mit einer Releasefolie abgedeckt wird. Diese Ausgestaltung ermöglicht die Anwendung einer Vielzahl von Klebemitteln, so dass eine flexible Anpassung an das Kartenmaterial gegeben ist.

Nach einer weiteren bevorzugten Ausgestaltung des Verfahrens ist vorgesehen, dass in die Polymerfolie innerhalb des Nutzens, vorzugsweise im Bereich des oder der Merkmale, Sicherheitsmerkmale und/oder Identitätsmerkmale, eingestanzt werden. Dies ermöglicht, zu einem späteren Zeitpunkt nach dem Aufbringen des Nutzens auf der Karte keine zerstörungsfreie Ablösung der Polymerfolie. Dadurch wird die Fälschungssicherheit erhöht.

Eine weitere bevorzugte Ausgestaltung des Verfahrens sieht vor, dass gleichzeitig mit der Stanzung der Nutzen eine Transportlochung, insbesondere Transportlöcher oder Transportausnehmungen, in den Folienverbund benachbart zu den Nutzen eingebracht wird. Diese Ausgestaltung ermöglicht, zu einem späteren Zeitpunkt beim Kaschieren der Nutzen auf die Rohkarte oder personalisierte Karte in der Kaschierstation eine präzise Zuführung als auch einen erleichterten Transport des Folienverbundes zur Karte. Darüber hinaus ermöglicht die gleichzeitige Einbringung der Transportausnehmungen zur Stanzung der Nutzen eine exakte Zuordnung zueinander. Bevorzugt erfolgt das Einbringen der Transportlöcher mit Hilfe einer im holographischen Belichtungsprozess erzeugten Steuerlinie mit folgendem Randbeschnitt der Folie, um eine exakte Positionierung der einzelnen Sicherheitsmerkmale zu den Transportlöchern zu gewährleisten. Alternativ orientiert sich die Maschine, die den Folienverbund auf die Karte bringt, direkt an der Steuerlinie und verzichtet auf die Transportlöcher. Die Ausrichtung in Laufrichtung erfolgt dann bevorzugt anhand separater Steuerlinien und/oder Steuermarken, die holographisch ausgeführt sein können, oder ggf. anhand eines definierten, maschinenlesbaren Sicherheitsmerkmal der Polymerfolie.

Nach einer weiteren bevorzugten Ausgestaltung der Erfindung wird nach der Durchführung der einzelnen Verfahrensschritte zur Herstellung des Folienverbundes das bahnförmige Material aufgerollt und als Rollenware dezentral zur Herstellung eines mehrlagigen Sicherheitsdokumentes bereitgestellt. Dadurch kann ein einfacher und sicherer Transport des Folienverbundes beziehungsweise einer sogenannten Overlayfolie, insbesondere einer volumenholographischen Overlayfolie, zur Herstellung von Sicherheitsdokumenten ermöglicht werden.

Die der Erfindung zugrunde liegende Aufgabe wird des Weiteren durch ein Verfahren zur Herstellung eines Sicherheitsdokumentes mit dem vorbeschriebenen erfindungsgemäßen Folienverbund dadurch gelöst, dass einer Personalisierstation eine Rohkarte zugeführt und anschließend personalisiert wird, dass ein Nutzen des Folienverbundes und die personalisierte Karte einander zugeordnet und einer Kaschierstation zugeführt werden, dass der Nutzen auf die Karte aufkaschiert und die Releasefolie anschließend abgezogen sowie das fertige Sicherheitsdokument aus der Kaschierstation herausgeführt wird. Aufgrund der Bereitstellung des erfindungsgemäßen Folienverbundes kann somit eine einfache dezentrale Herstellung des Sicherheitsdokumentes ermöglicht werden. Gleichzeitig ist durch dieses Verfahren des Sicherheitsdokumentes ermöglicht, dass die Personalisierung der Karte unabhängig von der Herstellung des Folienverbundes erfolgt und unmittelbar vor Ort durchgeführt werden kann. Zusätzlich ist eine einfache Herstellung eines Sicherheitsdokumentes gegeben, ohne dass beispielsweise ein logistischer Aufwand für ein Klebemittel, einen Schutzlack oder eine Kratzschutzbeschichtung sowie ein Wartungsaufwand für Beschichtungs-, Lackier- und/oder Stanzwerkzeuge oder dergleichen erforderlich ist. Die zeitliche Abfolge kann je nach Personalisierungsart auch variieren. Insbesondere bei der Kombination verschiedener Personalisierungsarten kann z.B. mittels eines Retransfer-Verfahrens ein Farbbild auf die Karte aufgebracht werden, im Anschluss das Aufkaschieren der Folie erfolgen und im Anschluss daran eine Laserpersonalisierung der Karte erfolgen. In letzterem Fall lassen sich bei geeigneter Wahl von Laserleistung und ggf. Schutzfolie des Folienverbunds taktile Elemente erzeugen, die bei einem komplett nachträglichen Aufkaschieren des Folienverbunds nicht umsetzbar wären.

Eine vorteilhafte Ausgestaltung des Verfahrens zur Herstellung des Sicherheitsdokumentes sieht vor, dass der Folienverbund mittels den Transportlöchern oder -ausnehmungen durch die Kaschierstation hindurchgeführt wird. Dadurch wird in einfacher Weise ein definierter Vorschub der jeweiligen Nutzen und eine exakte Ausrichtung zur Karte innerhalb der Kaschierstation ermöglicht. Alternativ können auch Steuerlinien und/oder Steuermarken auf dem Folienverbund vorgesehen sein, die zum Hindurchführen durch die Kaschierstation abgefragt werden.

Eine weitere vorteilhafte Ausgestaltung des Verfahrens sieht vor, dass als holographische Kennzeichnung aufgebrachte Steuerlinien und/oder Steuermarken abgefragt werden.

Vor dem Kaschieren des Nutzens und der Karte werden nach einer bevorzugten Ausgestaltung des Verfahrens die auf dem Nutzen aufgebrachte Steuerlinie und/oder Steuermarke sowie ein Ausrichtelement der Karte abgefragt, um den Nutzen und die Karte zueinander auszurichten und zueinander zu positionieren. Als Ausrichtelement der Karte kann beispielsweise eine Kartenkante dienen. Darüber hinaus kann auch ein prägnantes Druckmerkmal wie beispielsweise ein OVI-Druck, eine Guilloche oder dergleichen verwendet werden. Ebenso kann auch die Position des Lichtbildes oder die Position eines weiteren Merkmals, Sicherheitsmerkmals und/oder Identitätsmerkmals als Ausrichtelement dienen.

Eine weitere bevorzugte Ausgestaltung des Verfahrens sieht vor, dass der Nutzen mit Druck und/oder Temperatur auf die personalisierte Karte aufkaschiert wird. Dadurch wird die auf den Polymerfilm aufgetragene Klebemittelschicht aktiviert und der Verarbeitungsprozess beschleunigt.

Die Erfindung sowie weitere vorteilhafte Ausführungsformen und Weiterbildungen derselben werden im Folgenden anhand der in den Zeichnungen dargestellten Beispiele näher beschrieben und erläutert.

Es zeigen:
- Figur 1a: eine schematische Schnittansicht eines Ausgangsverbundmaterials zur Herstellung eines erfindungsgemäßen Folienverbundes,
- Figur 1b: eine schematische Schnittansicht eines alternativen Ausgangsverbundmaterials zur Herstellung eines erfindungsgemäßen Folienverbundes,
- Figur 2a: eine schematische Schnittansicht des erfindungsgemäßen Folienverbundes,
- Figur 2b: eine schematische Ansicht des Folienverbundes auf Figur 2a,
- Figur 3: eine schematische Darstellung zur Herstellung des Folienverbundes aus einem Ausgangsverbundmaterial gemäß Figur 1a und
- Figur 4: eine schematische Darstellung zur Herstellung eines mehrlagigen Sicherheitsdokumentes.

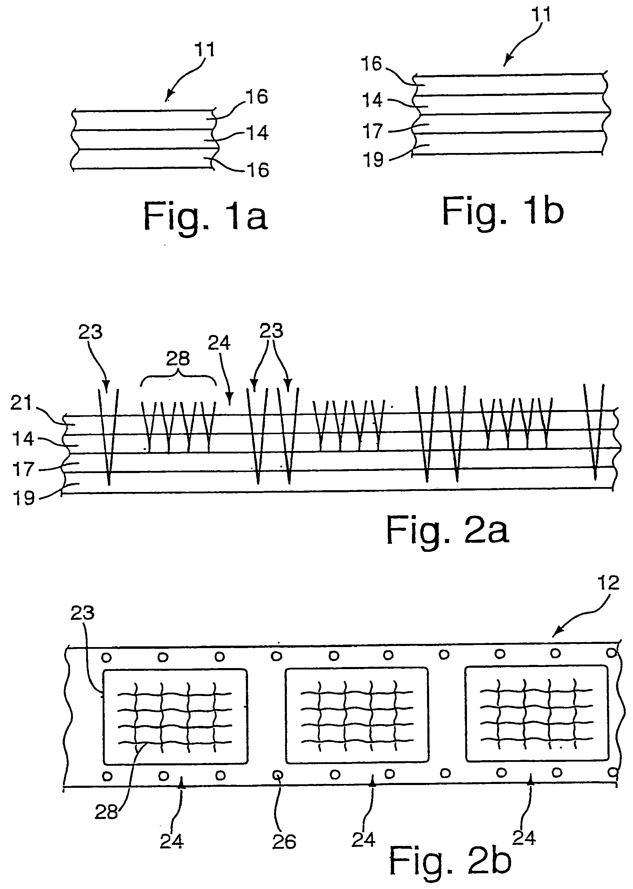

In Figur 1a ist eine schematische Schnittarisicht einer ersten Ausführungsform eines Ausgangsverbundmaterials 11 zur Herstellung eines erfindungsgemäßen Folienverbundes 12 gemäß den Figuren 2a und 2b dargestellt. Dieses Ausgangsverbundmaterial 11 besteht aus einer Polymerfolie 14 sowie beidseitig dazu angeordneten Schutzfolien 16, welche die Polymerfolie 14 vor Beschädigungen während des Transportes schützen. Diese Polymerfolie 14 ist ein- oder mehrlagig ausgebildet und besteht aus einem Photopolymer, einer Silberhalogenid-Beschichtung, einer Dichromatgelatine oder weiteren für die Volumenholographie geeigneten Materialien. Dieser Polymerfilm 14 weist beispielsweise eine Dicke von 1 bis 50 µm, insbesondere 5 bis 25 µm, auf. Vor der Weiterverarbeitung des Ausgangsverbundmaterials 11 zum Folienverbund 12 wird zumindest ein Sicherheitsmerkmal in die Polymerfolie 14 eingebracht. Dies kann als erster Verfahrensschritt zur Herstellung des nachfolgend näher beschriebenen erfindungsgemäßen Folienverbundes 12 vorgesehen sein oder bereits einen Verfahrensschritt darstellen, der vor der zur Verfügungstellung des Ausgangsverbundmaterials 11 erfolgt ist. Das in die Polymerfolie 14 eingebrachte Sicherheitsmerkmal ist insbesondere durch eine holographische Belichtung erfolgt. Dabei können kinematische Strukturen, 2D- oder 3D-Objekte, beliebige Muster oder auch individuelle Daten eingebracht werden. Insbesondere erfolgt eine solche holographische Belichtung gemäß dem in der EP 0 896 260 A1 beschriebenen Verfahren.

Die Polymerfolie 14 ist besonders als patch-applikationsfähige Hologrammfolie, insbesondere Volumenhologrammfolie, ausgebildet. Das nachfolgend beschriebene Verfahren zur Herstellung des erfindungsgemäßen Folienverbundes 12 umfasst insbesondere ein Ausgangsverbundmaterial 11 mit einer Polymerfolie 14, welche als Sicherheitsmerkmal zumindest ein Volumenhologramm beinhaltet.

In Figur 1b ist eine alternative Ausführungsform eines Ausgangsverbundmaterials 11 zu Figur 1a dargestellt. Dieses Ausgangsverbundmaterial 11 gemäß Figur 1b weicht dahingehend ab, dass anstelle einer zweiten Schutzfolie 16 bereits auf einer Seite der Polymerfolie 14 eine Kratzschutzschicht 17 über eine Klebemittelschicht, die nicht näher dargestellt ist, mit der Polymerfolie 14 verbunden ist, und dass auf der Kratzschutzschicht 17 eine Releasefolie 19 aufgebracht ist. Im Übrigen umfasst diese alternative Ausführungsform des Ausgangsverbundmaterials 11 die gleichen Schichten und Eigenschaften wie die Ausführungsform gemäß Figur 1a.

In Figur 2a ist eine schematische Seitenansicht des erfindungsgemäßen Folienverbundes 12 dargestellt. Die Figur 2b zeigt eine Draufsicht auf den Folienverbund 12 gemäß Figur 2a. Der Folienverbund 12 weist gemäß einer ersten Ausführungsform einen Schichtaufbau auf, bei dem auf einer Seite der Polymerfolie 14 eine Klebemittelschicht 21 aufgebracht ist. Diese Klebemittelschicht besteht bevorzugt aus einem PC-Kleber, PET-Kleber oder einem anderen geeigneten Kleber , einem zweikomponentigen Klebstoff, einem thermischen Reaktivklebstoff oder dergleichen für das ausgewählte oder die ausgewählten Materialien des Folienverbundes und der Karte. Das Klebemittel ist bevorzugt temperatur- und/oder druckaktiviert. Die Klebemittelschicht 21 ist beispielsweise blockfrei ausgebildet, so dass eine Abdeckschicht oder eine Transferfolie nicht erforderlich ist. Sofern die Klebemittelschicht 21 nicht blockfrei ist, kann eine zusätzliche, nicht näher dargestellte Abdeckschicht oder Transferfolie aufgebracht sein. Solche Klebemittelschichten weisen bevorzugt eine Schichtdicke von 0,5 bis 50 µm, insbesondere 1 bis 20 µm, auf.

Die Polymerfolie 14 weist auf der der Klebemittelschicht 21 gegenüberliegenden Seite die Kratzschutzschicht 17 und die Releasefolie 19 auf. Die Kratzschutzschicht 17 ist bevorzugt als kratz- und/oder abriebfeste Folie, beispielsweise aus PET oder als kratz- und/oder abriebfest beschichtete Folie ausgebildet. Die Dicke der Kratzschutzschicht 17 beträgt beispielsweise 1 bis 100 µm, insbesondere 5 bis 50 µm. Die darauf aufgebrachte Releasefolie 19 dient hauptsächlich zum Transport des Folienverbundes 12 durch die einzelnen Bearbeitungsstationen während der Verarbeitung.

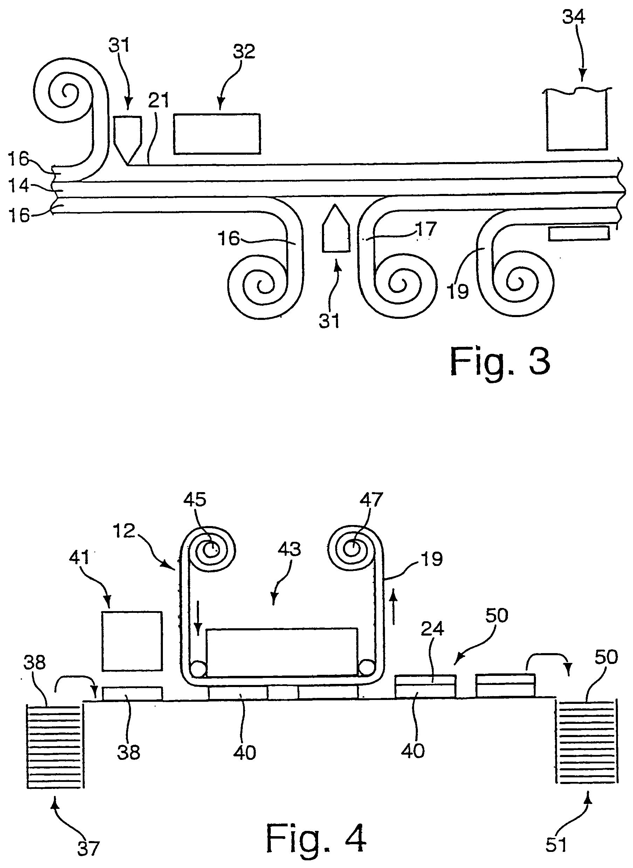

Der Folienverbund 12 weist eine Stanzung 23 auf, durch welche Nutzen 24 ausgestanzt werden. Bei dieser Stanzung 23, die schematisch in Figur 2a dargestellt ist, erfolgt ein Durchtrennen der Klebemittelschicht 21, der Polymerfolie 14, der Kratzschutzschicht 17 sowie ein teilweise Eindringen in die Releasefolie 19. Diese wird jedoch nicht durchtrennt. Diese Stanzung 23 zur Bildung des Nutzens 24 ist bevorzugt in einem geringen Maß kleiner als das Format der später zu kaschierenden Karte, wie dies nachfolgend in Figur 4 noch beschrieben sein wird. Gleichzeitig kann mit der Stanzung 23 in den Folienverbund 12 eine Transportlochung 26 eingebracht werden. Diese Transportlochung 26 erstreckt sich durch den gesamten Schichtaufbau des Folienverbundes 12 und verläuft bevorzugt am seitlichen Rand entlang der bahnförmigen Materialien des Folienverbundes 12.

Ergänzend können innerhalb des jeweiligen Nutzens 24 Sollbruchstellen 28 eingebracht werden, welche durch Schnitte erzeugt werden, die sich durch die Klebemittelschicht 21 und die Polymerfolie 14 hindurch erstrecken. Insbesondere werden diese Sollbruchstellen 28 innerhalb der Sicherheitsmerkmale eingebracht.

Ein solcher Folienverbund 12 wird bevorzugt als Rollenware zum Versand für die dezentrale Herstellung der Sicherheitsdokumente bereitgestellt.

In Figur 3 ist eine schematische Darstellung zur Herstellung eines solchen Folienverbundes 12 ausgehend von einem Ausgangsverbundmaterial 11 gemäß Figur 1a dargestellt. In einem ersten Arbeitsschritt wird die eine Schutzfolie 16 abgezogen und aufgewickelt. Anschließend wird in einer Klebemittelauftragsstation 31 eine Klebemittelschicht 21 aufgebracht. Anschließend wird diese Klebemittelschicht 21 in einer Trockenstation 32 getrocknet. Bevorzugt wird in der Klebemittelauftragsstation 31 die Klebemittelschicht 21 nutzenbezogen aufgetragen, was bedeutet, dass der Klebemittelauftrag nur im Stanzbereich des Nutzens 24 erfolgt, um eine Verklebung außerhalb des Randbereiches des Nutzens 24 zu vermeiden. Alternativ kann auch ein vollflächiger Auftrag der Klebemittelschicht 21 vorgesehen sein. Gegebenenfalls erfolgt noch ein Aufkaschieren einer die Klebemittelschicht 21 abdeckenden Schutzfolie.

Während oder nach dem Durchlaufen der Trocknungsstation 32 kann die weitere Schutzfolie 16 abgezogen werden. Anschließend wird auf die Polymerfolie 14 eine Klebemittelschicht aufgebracht, um dann die Kratzschutzschicht 17 aufzubringen. Alternativ kann diese auch auflackiert, aufgesprüht oder dergleichen werden. In einem nachfolgenden Schritt wird auf die Kratzschutzschicht 17 die Releasefolie 19 aufgebracht. Dieser Folienverbund 12 wird einer Stanzstation 34 zugeführt, um die Stanzung 23 zur Herstellung der Nutzen 24 sowie gegebenenfalls die Transportlochung 26 und die Sollbruchstellen 28 einzubringen. Anschließend wird der Folienverbund 12 aufgewickelt und als Rollenware für den weiteren Transport bereitgestellt. Bevorzugt wird die Kratzschutzschicht 17 und die Releasefolie 19 bereits als ein Folienverbund geliefert.

Sofern ein Ausgangsverbundmaterial 11 gemäß Figur 1b verwendet wird, ist lediglich bei dem vorbeschriebenen Verfahren erforderlich, dass die erste Schutzfolie 16 abgezogen und die Klebemittelschicht 21 aufgebracht und anschließend getrocknet sowie nachfolgend der Folienverbund 12 durch die Stanzstation 34 hindurchgeführt wird.

Der durch das Verfahren gemäß Figur 3 hergestellte erfindungsgemäße Folienverbund 12 wird zur dezentralen Herstellung eines Sicherheitsdokumentes als Rollenware bereitgestellt. Gleichzeitig werden Rohkarten 38 bereitgestellt, welche beispielsweise ein ID-1-, ID-2- oder ID-3-Format aufweisen können. Solche Rohkarten 38 können im Aufbau vielfältig sein. Es können lediglich verschiedene Schichten aus Papier und/oder Kunststoffmaterialien vorgesehen sein. Ebenso können Transpondermodule, kontaktbehaftete Chips, verschiedene Lagen Sicherheitsdruck, Vorbereitung für Lasergravur, Vorbereitung für Inkjet-Bedruckung, Vorbereitung für Thermosublimationspersonalisierung, Vorbereitung für Retransfer-Bedruckung enthalten sein.

In Figur 4 ist schematisch ein dezentrales Herstellungsverfahren für mehrlagige Sicherheitsdokumente 50 dargestellt. Aus einem Speicher 37 mit Rohkarten 38 werden nacheinander Rohkarten 38 auf ein Transportband aufgelegt. Diese werden anschließend einer Personalisierstation 41 zugeführt, in der die Rohkarte 38 beispielsweise mittels InkJet, Retransfer, Thermosublimation oder dergleichen personalisiert wird. Anschließend wird diese personalisierte Karte 40 einer Kaschierstation 43 zugeführt. Der von einer Vorratsrolle 45 abgezogene Folienverbund 12 wird bevorzugt über die Transportlochung 26 transportiert und ebenfalls der Kaschierstation 43 zugeführt. In der Kaschierstation 43 wird eine Positionierung des Nutzens 24 zur personalisierten Karte 40 durchgeführt, indem beispielsweise ein Abgleich von Steuermarken und/oder Steuerlinien auf der Karte 40 und/oder dem Folienverbund 12 vorgenommen wird. Anschließend erfolgt die Kaschierung des Nutzens vorzugsweise durch Verkleben des Nutzens 24 mit der Karte 40 durch Druck und/oder Temperatur. Die Releasefolie 19 wird von dem Nutzen 24 abgezogen und auf einer Rolle 47 aufgewickelt. Das fertiggestellte Sicherheitsdokument 50 wird in einen Speicher 51 übergeführt und gestapelt.

Sofern anstelle eines nutzenbezogenen Klebemittelschichtauftrages eine vollflächige Beschichtung der Klebemittelschicht 21 auf der Polymerfolie 14 erfolgt ist, wird die Releasefolie 19 abgezogen, solange die Klebemittelschicht 21 noch keine feste Verbindung mit der Karte 40 gebildet hat.

Sofern anstelle des in den Figuren 2a und 2b dargestellten Folienverbundes 12 ein Folienverbund bereitgestellt ist, bei dem die Klebemittelschicht 21 mit einer Transfer- oder Schutzfolie abgedeckt ist, erfolgt das Abziehen dieser Schutzfolie zwischen dem Abwickeln von der Vorratsrolle 45 und vor dem Zuführen zur Kaschierstation 43.

Durch die Bereitstellung des erfindungsgemäßen Folienverbundes 12, insbesondere eines volumenholographischen Folienverbundes 12, beziehungsweise eines volumenholographischen Overlayfilms, ist eine einfache Herstellung eines personalisierten Sicherheitsdokumentes mit nahezu wartungsfreien Maschinen ermöglicht, welches lediglich die Arbeitsschritte der Personalisierung und Kaschierung umfasst.

## Patentansprüche

1. Folienverbund zum Kaschieren auf eine Karte (40) zur dezentralen Herstellung eines mehrlagigen Sicherheitsdokumentes (50) mit zumindest einer Polymerfolie (14), wobei auf einer Seite der Polymerfolie (14) eine Kratzschutzschicht (17) und eine darauf abziehbare Releasefolie (19) vorgesehen sind, wobei auf der gegenüberliegenden Seite der Polymerfolie (14) eine Klebemittelschicht (21) zum Aufkaschieren auf der Karte (40) vorgesehen ist und wobei die Polymerfolie (14) mehrere durch Stanzungen (23) hergestellte Nutzen (24) umfasst und die jeweilige Stanzung (23) die Klebemittelschicht (21), die Polymerfolie (14) und die Kratzschutzschicht (17) durchdringt, **dadurch gekennzeichnet, dass** die Stanzung (23) teilweise in die Releasefolie (19) eindringt und dass die Polymerfolie (14) innerhalb des Nutzens (24) Sollbruchstellen (28) aufweist.

2. Folienverbund nach Anspruch 1, **dadurch gekennzeichnet, dass** in dem Nutzen (24) ein Merkmal, ein Sicherheitsmerkmal und/oder ein Identitätsmerkmal eingebracht ist und vorzugsweise als Merkmal, Sicherheitsmerkmal und/oder Identifikationsmerkmal eine holographische Kennzeichnung, insbesondere ein Volumenhologramm, ein Prägehologramm oder eine vorbestimmte Kennzeichnung, insbesondere als fortlaufende Kennzeichnung, ausgebildet ist.

3. Folienverbund nach Anspruch 2, **dadurch gekennzeichnet, dass** die Polymerfolie (14) innerhalb des Nutzens (24) im Bereich des Merkmals Sollbruchstellen (28) aufweist.

4. Folienverbund nach einem der vorhergehenden Ansprüche, **dadurch gekennzeichnet, dass** der jeweilige Nutzen (24) ein Format aufweist, welches dem Format der Rohkarte entspricht oder geringfügig kleiner ist.

5. Folienverbund nach einem der vorhergehenden Ansprüche, **dadurch gekennzeichnet, dass** benachbart und/oder außerhalb zum Nutzen (24) eine Transportlochung (26) in die bahnförmigen Materialen des Folienverbundes (12) eingebracht ist und/oder eine Steuerlinie und/oder Steuermarke aufgebracht ist und vorzugsweise die Steuerlinie und/oder die Steuermarke als holographische Kennzeichnung ausgebildet sind.

6. Folienverbund nach einem der vorhergehenden Ansprüche, **dadurch gekennzeichnet, dass** die Polymerfolie ein- oder mehrschichtig ausgebildet ist und vorzugsweise aus einem Photopolymer, einer Silberhalogenid-Beschichtung, einer Dichromatgelatine besteht.

7. Verfahren zur Herstellung eines Folienverbundes (12) nach einem der Ansprüche 1 bis 6,
- bei dem eine beidseitig mit einer Schutzfolie (16) versehene Polymerfolie (14) bereitgestellt wird, bei dem eine Schutzfolie (16) abgezogen und eine Klebemittelschicht (21) auf die Polymerfolie (14) aufgebracht wird,
- bei dem die gegenüberliegende Schutzfolie (16) abgezogen und anschließend eine Kratzschutzschicht (17) aufgebracht wird,
- bei dem auf die Kratzschutzschicht (17) eine Releasefolie (19) aufgebracht wird und
- bei dem eine Stanzung (23) in den bahnförmigen Folienverbund (12) zur Herstellung mehrerer Nutzen (24) eingebracht wird, welche die Klebemittelschicht (21), die Polymerfolie (14), die Kratzschutzschicht (17) durchtrennt und in die Releasefolie (19) nur teilweise eindringt und
- bei dem in die Klebemittelschicht (21) und Polymerfolie (14) innerhalb des Nutzens (24) Sollbruchstellen (28) eingestanzt werden.

8. Verfahren zur Herstellung eines Folienverbundes (12) nach einem der Ansprüche 1 bis 6,
- bei dem eine Polymerfolie (14) mit einer auf einer Seite vorgesehenen Schutzfolie (16) und auf einer gegenüberliegenden Seite aufgebrachten Kratzschutzschicht (17) und einer darauf angeordneten Releasefolie (19) bereitgestellt wird,
- bei dem die Schutzfolie (16) abgezogen und auf die Polymerfolie (14) eine Klebemittelschicht (21) aufgebracht wird und
- bei dem eine Stanzung (23) des bahnförmigen Folienverbundes (12) zur Herstellung mehrerer Nutzen (24) mit einem Format der zu kaschierenden Karte (40) eingebracht wird, welche die Klebemittelschicht (21), die Polymerfolie (14), die Kratzschutzschicht (17) durchtrennt und in die Releasefolie (19) nur teilweise eindringt und
- bei dem in die Klebemittelschicht (21) und Polymerfolie (14) innerhalb des Nutzens (24) Sollbruchstellen (28) eingestanzt werden.

9. Verfahren nach Anspruch 7 oder 8, **dadurch gekennzeichnet, dass** vor dem Ablösen der ersten Schutzfolie (16) zumindest ein Merkmal, ein Sicherheitsmerkmal und/oder Identitätsmerkmal, eingebracht wird und vorzugsweise als Merkmal, Sicherheitsmerkmal und/oder Identitätsmerkmal, insbesondere ein Volumenhologramm oder Prägehologramm, oder eine vorbestimmte Kennzeichnung, insbesondere eine fortlaufende Kennzeichnung, eingebracht wird.

10. Verfahren nach Anspruch 7 oder 8, **dadurch gekennzeichnet, dass** die Klebemittelschicht (21) aufgeprägt, aufgedruckt oder aufgerakelt und vorzugsweise anschließend getrocknet sowie die Klebemittelschicht (21) aus einem temperaturaktivierbaren und/oder druckaktivierbaren Klebstoff, einem zweikomponentigen Klebstoff, einem thermischen Reaktivklebstoff, hergestellt und vorzugsweise innerhalb der Stanzung (23) des Nutzens (24) aufgebracht wird.

11. Verfahren nach Anspruch 7 oder 8, **dadurch gekennzeichnet, dass** die Klebemittelschicht (21) blockfrei ausgebildet wird.

12. Verfahren nach einem der Ansprüche 7 oder 8, **dadurch gekennzeichnet, dass** als erste Alternative in die Klebemittelschicht (21) und Polymerfolie (14) innerhalb des Nutzens (24), im Bereich des Merkmals, Sicherheitsmerkmals und/oder Identitätsmerkmals die Sollbruchsteller (28) eingestanzt werden oder als zweite Alternative gleichzeitig mit der Stanzung (23) der Nutzen (24) eine Transportlochung (26) eingestanzt und/oder Steuerlinie und/oder Steuermarke aufgebracht wird, wobei in der zweiten Alternative die Steuerlinie und/oder die Steuermarke durch eine holographische Belichtung als holographische Kennzeichnung aufgebracht wird.

13. Verfahren nach Anspruch 7 oder 8, **dadurch gekennzeichnet, dass** der Folienverbund (12) nach seiner Herstellung aufgerollt und als Rollenware zum Transport für die Personalisierung von mehrlagigen Sicherheitsdokumenten (51) bereitgestellt wird.

14. Verfahren zur Herstellung eines mehrlagigen Sicherheitsdokumentes (15) mit einem Folienverbund (12), der nach einem Verfahren gemäß den Ansprüchen 7 bis 13 hergestellt ist,
- bei dem eine Rohkarte (38) einer Personalisierstation (41) zugeführt und personalisiert wird und aus der Personalisierstation (41) als personalisierte Karte (40) herausgeführt wird,
- bei dem ein Nutzen (24) des Folienverbundes (12) und die Karte (40) einander zugeordnet und einer Kaschierstation (43) zugeführt werden,
- bei dem der Nutzen (24) auf die Karte (40) kaschiert und die Releaseschicht (19) abgezogen wird und
- bei dem das fertige Sicherheitsdokument (50) aus der Kaschierstation herausgeführt wird.

15. Verfahren nach Anspruch 14, **dadurch gekennzeichnet, dass** der Folienverbund (12) mittels einer Transportlochung (26) durch die Kaschierstation (43) hindurchgeführt wird und/oder die Steuerlinien und/oder Steuermarken zum Hindurchführen des Folienverbundes (12) durch die Kaschierstation (43) abfragt werden und vorzugsweise die als holographische Kennzeichnung auf dem Folienverbund (12) ausgebildete Steuerlinie und/oder Steuermarke abgefragt wird.

16. Verfahren nach Anspruch 14, **dadurch gekennzeichnet, dass** vor dem Kaschieren des Nutzens (24) und der Karte (40) die auf den Nutzen (24) aufgebrachte Steuerlinie und/oder Steuermarke und ein auf der Karte (40) vorgesehenes oder aufgebrachtes Ausrichtelement zueinander ausgerichtet und positioniert werden und vorzugsweise der Nutzen (24) mit Druck und/oder Temperatur auf die personalisierte Karte (40) aufkaschiert wird.

## Claims

1. A composite film to be applied as a liner onto a card (40) for the decentralised production of a multilayer security document (50) having at least one polymer film (14), with one side of the polymer film (14) being provided with a scratch-resistant layer (17) having a peelable release film (19) applied thereon, with the opposite side of the polymer film (14) being provided with an adhesive layer (21) for application as a liner onto the card (40), and with the polymer film (14) comprising a plurality of use features (24) fabricated by means of punchings (23), each individual punching (23) penetrating the adhesive layer (21), the polymer film (14), and the scratch-resistant layer (17), **characterised in that** the punching (23) partially advances into the release film (19) and **in that** the polymer film (14) has breaking points (28) formed within the use feature (24).

2. The composite film as claimed in claim 1, **characterised in that** the use feature (24) has a feature, a security feature and/or an identity feature introduced therein, said feature, security feature and/or identification feature being preferably realised in the form of a holographic marking, in particular a volume hologram, an embossed hologram or a predefined marking, in particular a continuous marking.

3. The composite film as claimed in claim 2, **characterised in that** the polymer film (14) has breaking points (28) formed within the use feature (24) in the region of said feature.

4. The composite film as claimed in any of the preceding claims, **characterised in that** the respective use feature (24) has a format that corresponds to, or is slightly smaller than, the format of the blank card.

5. The composite film as claimed in any of the preceding claims, **characterised in that** adjacent to, and/or outside of, the use feature (24), a feed perforation (26) is introduced into the web-shaped materials forming the composite film (12) and/or a control line and/or control mark is applied thereon, said control line and/or control mark being preferably realised in the form of a holographic marking.

6. The composite film as claimed in any of the preceding claims, **characterised in that** the polymer film is a one-layer or a multi-layer film and preferably consists of a photopolymer, a silver halide coating, a dichromate gelatin.

7. A method for producing a composite film (12) as claimed in any one of claims 1 to 6,
- wherein a polymer film (14) having a protective film (16) applied on both sides thereof is provided in which one protective film (16) is peeled off and an adhesive layer (21) is applied onto the polymer film (14),
- wherein the opposite protective film (16) is peeled off and a scratch-resistant layer (17) is applied subsequently,
- wherein a release film (19) is applied onto the scratch-resistant layer (17), and
- wherein a punching (23) is introduced into the web-shaped composite film (12) in order to produce a plurality of use features (24), which punching intersects the adhesive layer (21), the polymer film (14), and the scratch-resistant layer (17) and only partially advances into the release film (19), and
- wherein breaking points (28) are punched into the adhesive layer (21) and the polymer film (14) within the use feature (24).

8. The method for producing a composite film (12) as claimed in any one of claims 1 to 6,
- wherein a polymer film (14) is provided which has a protective film (16) present on one side thereof and a scratch-resistant layer (17) applied on an opposite side thereof, with a release film (19) disposed on the latter,
- wherein the protective film (16) is peeled off and an adhesive layer (21) is applied onto the polymer film (14), and
- wherein a punching (23) of the web-shaped composite film (12) is introduced in order to produce a plurality of use features (24) having a format corresponding to the card (40) that is to undergo the lining operation, which punching intersects the adhesive layer (21), the polymer film (14), and the scratch-resistant layer (17) and only partially advances into the release film (19), and
- wherein breaking points (28) are punched into the adhesive layer (21) and the polymer film (14) within the use feature (24).

9. The method as claimed in claim 7 or 8, **characterised in that** prior to the removal of the protective film (16), at least one feature, one security feature and/or one identity feature is introduced, and **in that** as a feature, security feature and/or identity feature, in particular a volume hologram or an embossed hologram or a predefined marking, in particular a continuous marking, is preferably introduced.

10. The method as claimed in claim 7 or 8, **characterised in that** the adhesive layer (21) is applied by embossing, printing or wiping and is then preferably dried, and **in that** the adhesive layer (21) is made of an adhesive which is activatable by temperature and/or by pressure, of a two-component adhesive, a thermally reactive adhesive, and **in that** the latter is preferably applied within the punching (23) of the use feature (24).

11. The method as claimed in claim 7 or 8, **characterised in that** the adhesive layer (21) is realised as a block-free film.

12. The method as claimed in any one of claims 7 or 8, **characterised in that** according to a first alternative, the breaking points (28) are punched into the adhesive layer (21) and the polymer film (14) within the use feature (24) in the region of the feature, security feature and/or identity feature, or, according to a second alternative, the punching of a feed perforation (26) and/or the application of a control line and/or control mark is performed simultaneously with the punching (23) of the use features (24), with the control line and/or control mark of the second alternative being applied, by holographic exposure, as a holographic marking.

13. The method as claimed in claim 7 or 8, **characterised in that** once the production is finished, the composite film (12) is made into a roll and provided as a rolled product, ready for transport and use in the personalisation of multilayer security documents (51).

14. A method for producing a multilayer security document (15) having a composite film (12) fabricated according to a method as claimed in claims 7 to 13,
- wherein a blank card (38) is supplied to a personalising station (41), personalised, and removed from the personalising station (41) as a personalised card (40),
- wherein a use feature (24) of the composite film (12) and the card (40) are associated with each other and are supplied to a lining station (43),
- wherein the use feature (24) is applied onto the card (40) as a liner and the release film (19) is removed, and
- wherein the finished security document (50) is removed from the lining station.

15. The method as claimed in claim 14, **characterised in that** the composite film (12) is moved through the lining station (43) by means of a feed perforation (26) and/or the control lines and/or control marks for moving the composite film (12) through the lining station (43) are retrieved and preferably the control line and/or control mark formed on the composite film (12) as a holographic marking is retrieved.

16. The method as claimed in claim 14, **characterised in that** prior to the lining of the use feature (24) and the card (40), the control line and/or control mark applied onto the use feature (24) and an alignment element provided or applied on the card (40) are aligned and positioned with respect to each other, and **in that** preferably the use feature (24) is applied as a liner onto the personalised card (40) using pressure and/or temperature.

## Revendications

1. Composite de feuilles destiné à être contrecollé sur une carte (40) en vue de la fabrication décentralisée d'un document de sécurité (50) multicouche avec au moins une feuille de polymère (14), sur une face de la feuille de polymère (14) étant prévues une couche anti-rayures (17) et, disposée sur celle-ci, une feuille pelliculable (19) qui peut être retirée, sur la face opposée de la feuille de polymère (14) étant prévue une couche de substance adhésive (21) pour le contrecollage sur la carte (40) et la feuille de polymère (14) comprenant plusieurs flans imprimés (24) réalisés par des découpages (23) et chaque découpage (23) traversant la couche de substance adhésive (21), la feuille de polymère (14) et la couche anti-rayures (17), **caractérisé en ce que** le découpage (23) entre partiellement dans la feuille pelliculable (19) et que la feuille de polymère (14) présente des points de rupture intentionnels (28) situés à l'intérieur du flan imprimé (24).

2. Composite de feuilles selon la revendication 1, **caractérisé en ce qu'**une caractéristique, une caractéristique de sécurité et/ou une caractéristique d'identité est insérée dans le flan imprimé (24) et **en ce qu'**un marquage holographique, en particulier un hologramme de volume, un hologramme estampé ou un marquage prédéterminé, en particulier en tant que marquage continu, est formé de préférence comme caractéristique, caractéristique de sécurité et/ou caractéristique d'identification.

3. Composite de feuilles selon la revendication 2, **caractérisé en ce que** la feuille de polymère (14) présente des points de rupture intentionnels (28) à l'intérieur du flan imprimé (24), et ce dans la zone de la caractéristique.

4. Composite de feuilles selon l'une quelconque des revendications précédentes, **caractérisé en ce que** le flan imprimé respectif (24) présente un format qui correspond au format de la carte brute ou qui est légèrement inférieur à celui-ci.

5. Composite de feuilles selon l'une quelconque des revendications précédentes, **caractérisé en ce qu'**une perforation de transport (26) est pratiquée dans les matériaux en forme de bande du composite de feuilles (12) de manière contiguë au flan imprimé (24) et/ou à l'extérieur de celui-ci et/ou en ce qu'une ligne de contrôle et/ou une marque de contrôle est appliquée et **en ce que** de préférence la ligne de contrôle et/ou la marque de contrôle est réalisée sous forme de marquage holographique.

6. Composite de feuilles selon l'une quelconque des revendications précédentes, **caractérisé en ce que** la feuille de polymère est réalisée en une couche ou en plusieurs couches et se compose de préférence d'un photopolymère, d'un revêtement en halogénures d'argent, d'une gélatine dichromatique.

7. Procédé destiné à la fabrication d'un composite de feuilles (12) selon l'une quelconque des revendications 1 à 6,
- lors duquel est fournie une feuille de polymère (14) dont les deux faces sont pourvues d'une feuille protectrice (16), lors duquel une feuille protectrice (16) est retirée et une couche de substance adhésive (21) est appliquée sur la feuille de polymère (14),
- lors duquel la feuille protectrice (16) située à l'opposé est retirée, puis une feuille anti-rayures (17) est appliquée,
- lors duquel une feuille pelliculable (19) est appliquée sur la couche anti-rayures (17) et
- lors duquel un découpage (23) est pratiqué dans le composite de feuilles (12) en forme de bande en vue de réaliser plusieurs flans imprimés (24), lequel découpage sectionne la couche de substance adhésive (21), la feuille de polymère (14), la couche anti-rayures (17) et ne rentre que partiellement dans la feuille pelliculable (19) et
- lors duquel des points de rupture intentionnels (28) sont pratiqués à l'intérieur du flan imprimé (24), dans la couche de substance adhésive (21) et la feuille de polymère (14).

8. Procédé destiné à la fabrication d'un composite de feuilles (12) selon l'une quelconque des revendications 1 à 6,
- lors duquel est fournie une feuille de polymère (14) comportant une feuille protectrice (16) prévue sur une face et, appliquée sur une face opposée, une couche anti-rayures (17) sur laquelle est disposée une feuille pelliculable (19),
- lors duquel la feuille protectrice (16) est retirée et une couche de substance adhésive (21) est appliquée sur la feuille de polymère (14) et
- lors duquel en vue de réaliser plusieurs flans imprimés (24), un découpage (23) du composite de feuilles (12) en forme de bande est réalisé conformément à un format de la carte (40) faisant l'objet du contrecollage, lequel découpage sectionne la couche de substance adhésive (21), la feuille de polymère (14), la couche anti-rayures (17) et ne rentre que partiellement dans la feuille pelliculable (19) et
- lors duquel des points de rupture intentionnels (28) sont pratiqués à l'intérieur du flan imprimé (24), dans la couche de substance adhésive (21) et la feuille de polymère (14).

9. Procédé selon la revendication 7 ou 8, **caractérisé en ce qu'**au moins une caractéristique, une caractéristique de sécurité et/ou une caractéristique d'identité est insérée avant le retrait de la première feuille protectrice (16) et **en ce qu'**un hologramme de volume ou un hologramme estampé ou un marquage prédéterminé, en particulier un marquage continu, est inséré de préférence comme caractéristique, caractéristique de sécurité et/ou caractéristique d'identité.

10. Procédé selon la revendication 7 ou 8, **caractérisé en ce que** la couche de substance adhésive (21) est appliquée par estampage, par impression ou à la racle, puis de préférence séchée et **en ce que** la couche de substance adhésive (21) est réalisée en une matière adhésive activable sous l'action de la température et/ou de la pression, en une matière adhésive à deux composants, en une matière adhésive réactive à la chaleur et **en ce qu'**elle est appliquée de préférence à l'intérieur du découpage (23) du flan imprimé (24).

11. Procédé selon la revendication 7 ou 8, **caractérisé en ce que** la couche de substance adhésive (21) est réalisée sans bloc.

12. Procédé selon l'une quelconque des revendications 7 ou 8, **caractérisé en ce que** selon une première alternative, le point de rupture intentionnel (28) est pratiqué dans la couche de substance adhésive (21) et la feuille de polymère (14) à l'intérieur du flan imprimé (24), et ce dans la zone de la caractéristique, de la caractéristique de sécurité et/ou de la caractéristique d'identité, ou **en ce que** selon la deuxième alternative, une perforation de transport (26) est réalisée par découpage et/ou une ligne de contrôle et/ou une marque de contrôle est appliquée en même temps que le découpage (23) des flans imprimés (24), la ligne de contrôle et/ou la marque de contrôle étant appliquée en tant que caractéristique holographique grâce à une exposition holographique.

13. Procédé selon la revendication 7 ou 8, **caractérisé en ce que** le composite de feuilles (12) est enroulé après sa fabrication et est fourni sous forme de rouleaux afin d'être transporté en vue de son utilisation dans la personnalisation de documents de sécurité (51) multicouches.

14. Procédé destiné à la fabrication d'un document de sécurité (15) multicouche avec un composite de feuilles (12) qui est fabriqué conformément à un procédé selon les revendications 7 à 13,
- lors duquel une carte brute (38) passe par une station de personnalisation (41) et est personnalisée et ressort de la station de personnalisation (41) sous forme de carte personnalisée (40),
- lors duquel un flan imprimé (24) du composite de feuilles (12) et la carte (40) sont affectés l'un à l'autre et passent par une station de contrecollage (43),
- lors duquel le flan imprimé (24) est contrecollé sur la carte (40) et la feuille pelliculable (19) est retirée et
- lors duquel, une fois fini, le document de sécurité (50) sort de la station de contrecollage.

15. Procédé selon la revendication 14, **caractérisé en ce que** le composite de feuilles (12) traverse la station de contrecollage (43) au moyen d'une perforation de transport (26) et/ou les lignes de contrôle et/ou les marques de contrôle destinées à faire passer le composite de feuilles (12) à travers la station de contrecollage (43) sont interrogées et **en ce que** de préférence la ligne de contrôle et/ou la marque de contrôle sous forme de marquage holographique formée sur le composite de feuilles (12) sont interrogées.

16. Procédé selon la revendication 14', **caractérisé en ce que**, avant le contrecollage du flan imprimé (24) et de la carte (40), la ligne de contrôle et/ou la marque de contrôle appliquée(s) sur le flan imprimé (24) ainsi qu'un élément d'alignement prévu ou appliqué sur la carte (40) sont alignés ou positionnés l'un par rapport à l'autre et **en ce que** de préférence le flan imprimé (24) est contrecollé sur la carte personnalisée (40) par pression et/ou température.
